# EUROPÄISCHE PATENTSCHRIFT

(11) **EP 3 981 053 B1**
(45) Veröffentlichungstag und Bekanntmachung des Hinweises auf die Patenterteilung: **14.02.2024**
(21) Anmeldenummer: 19746028.0
(22) Anmeldetag: 16.07.2019
(51) Int. Cl.: H02J 3/16, H02J 13/00, G05B 11/32, G05B 13/04, H02M 1/00, H02J 3/36

(54) **VERFAHREN UND STEUEREINRICHTUNG ZUM BETREIBEN EINER UMRICHTERBASIERTEN NETZEINHEIT**
METHOD AND CONTROL DEVICE FOR OPERATING A CONVERTER-BASED GRID UNIT
PROCÉDÉ ET DISPOSITIF DE COMMANDE POUR FAIRE FONCTIONNER UNE UNITÉ DE RÉSEAU À BASE DE CONVERTISSEURS

(43) Veröffentlichungstag der Anmeldung: 13.04.2022
(73) Patentinhaber: Siemens Energy Global GmbH & Co. KG, 81739 München (DE)
(72) Erfinder: FREY, Katharina, 91052 Erlangen (DE); SPAHIC, Ervin, 91052 Erlangen (DE)
(86) Internationale Anmeldenummer: PCT/EP2019/069155
(87) Internationale Veröffentlichungsnummer: WO 2021/008695

(56) Entgegenhaltungen:
- WO-A1-2014/205089
- TRAN VIET THANG ET AL: "A Robust Power Management Strategy With Multi-Mode Control Features for an Integrated PV and Energy Storage System to Take the Advantage of ToU Electricity Pricing", IEEE TRANSACTIONS ON INDUSTRY APPLICATIONS, IEEE SERVICE CENTER, PISCATAWAY, NJ, US, Bd. 55, Nr. 2, 1. März 2019 (2019-03-01), Seiten 2110-2120, XP011714387, ISSN: 0093-9994, DOI: 10.1109/TIA.2018.2884622 [gefunden am 2019-03-13]

## Beschreibung

Die Erfindung bezieht sich auf ein Verfahren zum Betreiben einer umrichterbasierten Netzeinheit, die elektrisch innerhalb eines Wechselspannungsabschnitts oder angrenzend an einen Wechselspannungsabschnitt eines elektrischen Netzes angeordnet und an diesen elektrisch angeschlossen ist, wobei bei dem Verfahren eine Steuereinrichtung durch Ansteuerung zumindest eines Umrichters der umrichterbasierten Netzeinheit die Einspeisung und Entnahme von Wirk- und/oder Blindleistung in den bzw. aus dem Wechselspannungsabschnitt einstellt.

Bei dem oder den Umrichtern der umrichterbasierten Netzeinheit kann es sich beispielsweise um Multilevelumrichter handeln, wie sie in der internationalen Patentanmeldung WO 2012/156261 A2 oder der Druckschrift "An Innovative Modular Multilevel Converter Topology Suitable for Wide Power Range" (A. Lesnicar und R. Marquardt, 2003 IEEE Bologna Power Tech Conference, 23.-26. Juni 2003, Bologna, Italien) beschrieben sind.

Aus der Schrift "A Robust Power Management Strategy With Multi-Mode Control Features for an Integrated PV and Energy Storage System to Take the Advantage of ToU Electricity Pricing" von Tran Viet Thang et al, IEEE Transactions on Industry Applications, 2110-2120, 1. März 2019, ist ein System zur Nutzung von Solarenergie mit einem Energiespeicher bekannt, das eine zeitabhängige Preisgestaltung (time-of-use pricing, ToU) ermöglicht. Dieses System weist einen netzgekoppelten Umrichter auf. Vier Spannungssensoren und vier Stromsensoren liefern Messwerte für den Betrieb des Systems.

Die internationale Patentanmeldung WO 2014/205089 A1 offenbart ein Verfahren zur Optimierung von Steuerungsparametern für Blindleistung und Wirkleistung eines netzgekoppelten Stromrichters anhand von Lastflussrechnungen.

Der Erfindung liegt die Aufgabe zugrunde, ein Verfahren zum Betreiben einer umrichterbasierten Netzeinheit anzugeben, das sich mit besonders wenig Rechenaufwand durchführen lässt. Des weiteren soll eine Steuereinrichtung zum Betreiben einer umrichterbasierten Netzeinheit angegeben werden.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben. Weiterhin wird die Aufgabe durch eine Steuereinrichtung mit den Merkmalen gemäß Patentanspruch 15 gelöst.

Bezüglich des Verfahrens ist vorgesehen, dass zu der Steuereinrichtung eine Vielzahl an Messwerten übermittelt wird, die sich zumindest auch auf unterschiedliche Messgrößen und/oder unterschiedliche Messorte innerhalb des Wechselspannungsabschnitts oder der umrichterbasierten Netzeinheit beziehen, und die Steuereinrichtung aus der Vielzahl an vorliegenden Messwerten durch Auswahl gemäß einer vorgegebenen Auswahlrichtlinie jeweils eine Messwertgruppe auswählt und die Ansteuerung des zumindest einen Umrichters auf der Basis der Messwerte der jeweils ausgewählten Messwertgruppe durchführt.

Ein wesentlicher Vorteil des erfindungsgemäßen Verfahrens besteht darin, dass die Steuereinrichtung zur Ansteuerung der umrichterbasierten Netzeinheit nicht stets alle vorliegenden Messwerte berücksichtigen muss, sondern nur die Messwerte der von der Auswahlrichtlinie definierten Messwertgruppe und die übrigen, nicht in der jeweiligen Messwertgruppe befindlichen Messwerte außer Acht lassen kann.

Die Messwertgruppen enthalten zu jedem Zeitpunkt oder zumindest im zeitlichen Mittel vorzugsweise weniger als 75 %, besonders bevorzugt weniger als die Hälfte der der Steuereinrichtung zur Verfügung stehenden Messwerte.

Bei den Messgrößen bzw. Messwerten kann es sich um elektrische Messgrößen oder Messwerte (z. B. Spannung, Strom, Leistung, Phasenlage etc.) und/oder um nichtelektrische Messgrö-ßen oder Messwerte (z. B. Temperatur, Windgeschwindigkeit, Sonneneinstrahlung oder etwaige Eisbildung) handeln.

Der Betrieb des Wechselspannungsabschnitts wird in der Regel zeitabhängig sein, insbesondere von der Tageszeit, dem Kalendertag oder Kalendermonat und/oder der Jahreszeit abhängig sein und über der Zeit zumindest hinsichtlich des Lastflusses veränderlich sein; vorteilhaft ist es daher, wenn auch die Auswahlrichtlinie zeitabhängig ist und die ausgewählten Messwertgruppen den jeweils aktuellen oder zumindest den prognostizierten Lastfluss berücksichtigen.

Die Auswahlrichtlinie wird vorzugsweise auf der Basis von prognostizierten zukünftigen Betriebszuständen des Wechselspannungsabschnitts erstellt.

Alternativ oder zusätzlich kann in vorteilhafter Weise vorgesehen sein, dass die Auswahlrichtlinie in Abhängigkeit von externen Daten erstellt wird, wobei die externen Daten andere Daten sind als die oben genannten Messwerte, von denen die Steuereinrichtung jeweils eine Messwertgruppe auswählt und zur Ansteuerung des Umrichters heranzieht. Als externe Daten können Messwerte externer Sensoren (Temperaturwerte, Windgeschwindigkeitswerte, Sonneneinstrahlungswerte, Eisbildungswerte) oder andere Arten von Daten wie beispielsweise der Strompreis berücksichtigt werden.

Alternativ oder zusätzlich kann in vorteilhafter Weise vorgesehen sein, dass die Auswahlrichtlinie auf der Basis von prognostizierten zukünftigen Betriebszuständen des Wechselspannungsabschnitts erstellt worden ist und in Abhängigkeit von externen Daten modifiziert wird.

Die Auswahlrichtlinie berücksichtigt vorzugsweise für jeden Zeitpunkt jeweils den prognostizierten Betriebszustand des Wechselspannungsabschnitts sowie außerdem mindestens eine mögliche Abweichung von dem prognostizierten Betriebszustand.

Vorteilhaft ist es insbesondere, wenn die mindestens eine berücksichtigte Abweichung oder eine der berücksichtigten Abweichungen einen Ausfall oder eine Fehlfunktion einer oder mehrerer Komponenten des Wechselspannungsabschnitts, eine Wartung oder Abschaltung einer Leitung oder eines Netzabschnitts oder eine geplante Wartung oder geplante Abschaltung einer Leitung oder eines Netzabschnitts betrifft.

Auch ist es vorteilhaft, wenn die mindestens eine berücksichtigte Abweichung oder eine der berücksichtigten Abweichungen eine Lastschwankung im Wechselspannungsabschnitt betrifft.

Die mindestens eine berücksichtigte Abweichung oder eine der berücksichtigten Abweichungen kann in vorteilhafter Weise auch eine Betriebsänderung einer oder mehrerer weiterer umrichterbasierter Netzeinheiten, die einen Bestandteil des Wechselspannungsabschnitts bilden, betreffen.

Darüber hinaus kann die mindestens eine berücksichtigte Abweichung oder eine der berücksichtigten Abweichungen externe Daten betreffen, sei es eine Abweichung von erwarteten Solldaten oder das Verlassen eines erwarteten Solldatenfensters, wobei die externen Daten andere Daten sind als die oben genannten Messwerte, von denen die Steuereinrichtung jeweils eine Messwertgruppe auswählt und zur Ansteuerung des Umrichters heranzieht.

Die mindestens eine berücksichtigte Abweichung oder eine der berücksichtigten Abweichungen kann in vorteilhafter Weise im Übrigen auch eine Abweichung des Strompreises von einem erwarteten Strompreis oder das Verlassen eines erwarteten Strompreisfensters betreffen.

Die Auswahlrichtlinie berücksichtigt vorzugsweise auch dynamische Vorgänge im Falle eines Fehlers oder einer Lastschwankung im Wechselspannungsabschnitt.

Bei einer als besonders vorteilhaft angesehenen Variante ist vorgesehen, dass die Steuereinrichtung eine Priorisierung der Messwerte innerhalb der jeweils ausgewählten Messwertgruppe vornimmt und diese Priorisierung bei der Ansteuerung des zumindest einen Umrichters berücksichtigt, wobei die Priorisierung zumindest auch einschließt, dass die Ansteuerung des zumindest einen Umrichters dazu führt, dass eine relative Abweichung eines Messwerts der ausgewählten Messwertgruppe von einem für diesen Messwert vorgegebenen Sollmesswert kleiner wird als die relative Abweichung eines anderen, weniger priorisierten Messwerts der ausgewählten Messwertgruppe von einem für diesen anderen Messwert vorgegebenen anderen Sollmesswert.

Die Auswahlrichtlinie wird durch Simulation der umrichterbasierten Netzeinheit und des Wechselspannungsabschnitts oder zumindest eines von der umrichterbasierten Netzeinheit beeinflussten Teilabschnitts des Wechselspannungsabschnitts für unterschiedliche prognostizierte Betriebszustände des Wechselspannungsabschnitts ermittelt und in Form eines Auswahlrichtliniendatensatzes in einem Speicher der Steuereinrichtung abgespeichert.

Die Auswahlrichtlinie wird vorzugsweise unter der Maßgabe erstellt, dass die Messwertgruppen jeweils eine minimale Anzahl an Messwerten aufweisen, mit denen eine Ansteuerung des Umrichters für die prognostizierten Betriebszustände und deren Abweichungen unter Einbezug dynamischer Vorgänge im Falle von Abweichungen unter Berücksichtigung der Einhaltung für das elektrische Netz vorgegebener Zielparameter noch möglich ist.

Die Auswahlrichtlinie ist vorzugsweise derart ausgestaltet, dass die ausgewählte Messwertgruppe zu zumindest einem Zeitpunkt, vorzugsweise zu jedem Zeitpunkt, jeweils zumindest zwei den Wechselspannungsabschnitt betreffende Messwerte umfasst.

Alternativ oder zusätzlich kann die Auswahlrichtlinie in vorteilhafter Weise derart ausgestaltet sein, dass die Messwertgruppen zu zumindest einem Zeitpunkt, vorzugsweise zu jedem Zeitpunkt, mehr den Wechselspannungsabschnitt betreffende Messwerte als den Umrichter betreffende Messwerte umfasst.

Alternativ oder zusätzlich kann die Auswahlrichtlinie in vorteilhafter Weise derart ausgestaltet sein, dass die Messwertgruppe zu jedem Zeitpunkt maximal 50 % der vorhandenen Messwerte umfasst.

Auch wird es als vorteilhaft angesehen, wenn im Falle eines Sonderbetriebszustands, der sich von den in der Auswahlrichtlinie berücksichtigten Betriebszuständen des Wechselspannungsabschnitts über ein vorgegebenes Maß hinaus unterscheidet, eine Sonderauswahlrichtlinie durch Simulation der umrichterbasierten Netzeinheit und des Wechselspannungsabschnitts oder zumindest eines von der umrichterbasierten Netzeinheit beeinflussten Teilabschnitts des Wechselspannungsabschnitts unter Berücksichtigung aller der Steuereinrichtung zur Verfügung stehender, aktueller Messwerte berechnet wird und die Sonderauswahlrichtlinie anstelle der Auswahlrichtlinie bei der Ansteuerung des zumindest einen Umrichters berücksichtigt wird.

Die umrichterbasierte Netzeinheit umfasst bei einer vorteilhaften Variante zwei Umrichter und eine Gleichstromleitung, die die zwei Umrichter verbindet, wobei die zwei Umrichter an unterschiedlichen Anschlussstellen des Wechselspannungsabschnitts angeschlossen sind.

Bei einer anderen vorteilhaften Variante ist die umrichterbasierte Netzeinheit durch einen einzigen Umrichter gebildet, der an den Wechselspannungsabschnitt angeschlossen ist.

Die Erfindung bezieht sich darüber hinaus auf eine Steuereinrichtung zum Betreiben einer umrichterbasierten Netzeinheit, die innerhalb eines Wechselspannungsabschnitts oder angrenzend an einen Wechselspannungsabschnitt eines elektrischen Netzes angeordnet ist, wobei die Steuereinrichtung dazu ausgebildet ist, durch Ansteuerung zumindest eines Umrichters der umrichterbasierten Netzeinheit die Einspeisung und Entnahme von Wirk- und/oder Blindleistung in den bzw. aus dem Wechselspannungsabschnitt einzustellen.

Erfindungsgemäß ist bezüglich einer solchen Steuereinrichtung vorgesehen, dass die Steuereinrichtung dazu ausgestaltet ist, eine Vielzahl an Messwerten zu empfangen, die sich zumindest auch auf unterschiedliche Messgrößen und/oder unterschiedliche Messorte innerhalb des Wechselspannungsabschnitts oder der umrichterbasierten Netzeinheit beziehen, und die Steuereinrichtung dazu ausgestaltet ist, aus der Vielzahl an vorliegenden Messwerten durch Auswahl gemäß einer vorgegebenen Auswahlrichtlinie jeweils eine Messwertgruppe auszuwählen und die Ansteuerung des zumindest einen Umrichters auf der Basis der Messwerte der jeweils ausgewählten Messwertgruppe durchzuführen.

Bezüglich der Vorteile und bezüglich vorteilhafter Ausgestaltungen der erfindungsgemäßen Steuereinrichtung sei auf die obigen Ausführungen im Zusammenhang mit dem erfindungsgemäßen Verfahren und den vorteilhaften Ausgestaltungen des erfindungsgemäßen Verfahrens verwiesen.

Die Erfindung wird nachfolgend anhand von Ausführungsbeispielen näher erläutert; dabei zeigen beispielhaft:
- Figur 1: ein Ausführungsbeispiel für einen Netzabschnitt eines elektrischen Netzes, der mit einer eine Hochspannungsgleichstromübertragungsleitung aufweisenden, umrichterbasierten Netzeinheit ausgestattet ist,
- Figur 2: ein schematisches Flussdiagramm zur Darstellung möglicher Verfahrensschritte zwecks Bildung einer zeitabhängigen Auswahlrichtlinie bzw. eines Auswahlrichtliniendatensatzes für eine Steuereinrichtung der umrichterbasierten Netzeinheit gemäß Figur 1,
- Fig 3-7: verschiedene Ausführungsbeispiele für Steuereinrichtungen, die bei der umrichterbasierten Netzeinheit gemäß Figur 1 eingesetzt werden können, und
- Figur 8: ein weiteres Ausführungsbeispiel für einen Netzabschnitt, der mit einer umrichterbasierten Netzeinheit ausgestattet ist, wobei die umrichterbasierte Netzeinheit bei dem Ausführungsbeispiel gemäß Figur 8 durch einen einzigen Umrichter gebildet ist.

In den Figuren werden der Übersicht halber für identische oder vergleichbare Komponenten stets dieselben Bezugszeichen verwendet.

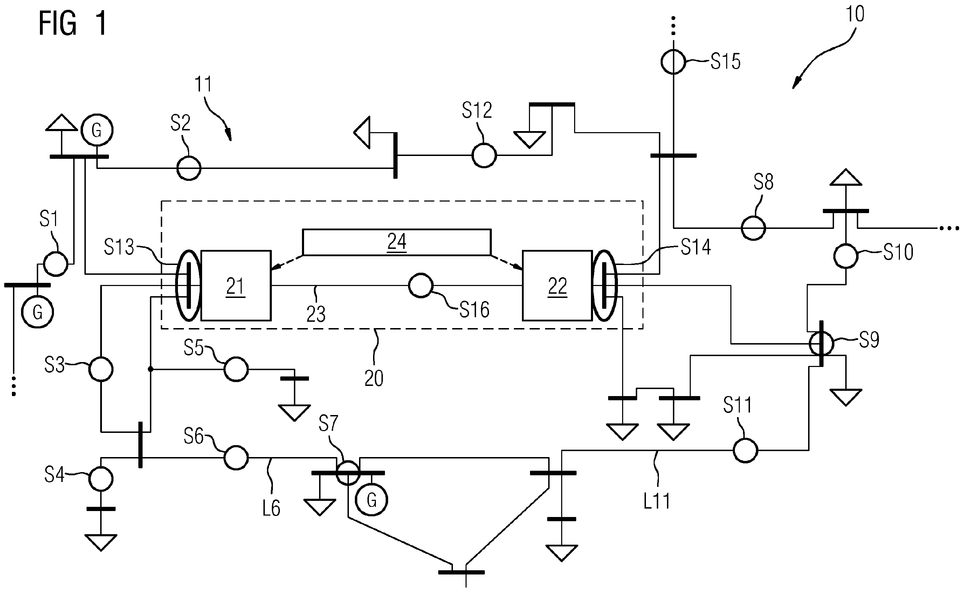

Die Figur 1 zeigt einen Netzabschnitt 10 eines elektrischen Netzes. Innerhalb eines Wechselspannungsabschnitts 11 des Netzabschnitts 10 sind elektrische Stromverbraucher, Generatoren G und eine umrichterbasierte Netzeinheit 20 angeordnet, die einen in der Figur 1 links angeordneten Umrichter 21, einen in der Figur 1 rechts angeordneten Umrichter 22 sowie eine die beiden Umrichter 21 und 22 verbindende Hochspannungsgleichstromleitung 23 aufweist. Zur Ansteuerung der beiden Umrichter 21 und 22 ist die umrichterbasierte Netzeinheit 20 mit einer Steuereinrichtung 24 ausgestattet.

Die Steuereinrichtung 24 steht über aus Gründen der Übersicht nicht dargestellte Verbindungsleitungen mit einer Vielzahl an Sensoren in Verbindung, die in der Figur 1 mit den Bezugszeichen S1 bis S16 gekennzeichnet sind. Die Sensoren S1 bis S16 können sich jeweils auf eine Messgröße oder mehrere Messgrö-ßen beziehen und jeweils eine Vielzahl an Messwerten zur Steuereinrichtung 24 übermitteln. Wie in der Figur 1 gezeigt, können die Sensoren S1 bis S16 an unterschiedlichen Messorten innerhalb des Wechselspannungsabschnitts 11 sowie an oder innerhalb der umrichterbasierten Netzeinheit 20 angeordnet sein.

Die Sensoren können elektrische Messgrößen (z. B. Spannung, Strom, Leistung, Phasenlage etc.) und/oder nichtelektrische Messgrößen (z. B. Temperatur, Windgeschwindigkeit, Sonneneinstrahlung oder etwaige Eisbildung) erfassen und als Messwerte zur Steuereinrichtung 24 übermitteln.

Aufgrund der Vielzahl an Sensoren S1 bis S16 liegt der Steuereinrichtung 24 also zu jedem Zeitpunkt eine Vielzahl an Messwerten vor, die sie zur Ansteuerung der beiden Umrichter 21 und 22 heranziehen kann bzw. könnte. Würde die Steuereinrichtung 24 zu jedem Zeitpunkt alle vorhandenen Messwerte berücksichtigen, so wäre ein sehr hohes Maß an Rechenleistung notwendig.

Um die Steuereinrichtung 24 zu entlasten, ist bei dem Ausführungsbeispiel gemäß Figur 1 vorgesehen, dass die Steuereinrichtung 24 gemäß einer vorgegebenen Auswahlrichtlinie für jeden Zeitpunkt nicht immer alle Messwerte, die von den Sensoren S1 bis S16 geliefert werden, berücksichtigen muss, sondern - soweit möglich - jeweils nur Messwertgruppen, nachfolgend auch Messwertuntergruppen genannt, da - zumindest im zeitlichen Mittel - die Messwertgruppen nicht alle zur Verfügung stehenden Messwerte umfassen sollen. Die Ansteuerung der beiden Umrichter 21 und 22 kann also auf der Basis der jeweils ausgewählten Messwertuntergruppe erfolgen.

Um zu gewährleisten, dass die Steuereinrichtung 24 die beiden Umrichter 21 und 22 trotz der Beschränkung der Anzahl der zu berücksichtigenden Messwerte bzw. trotz der Beschränkung auf Messwertgruppen bestmöglich ansteuern kann, sollte die Auswahl der Messwerte bzw. die jeweils ausgewählte Messwertuntergruppe möglichst geeignet gewählt werden.

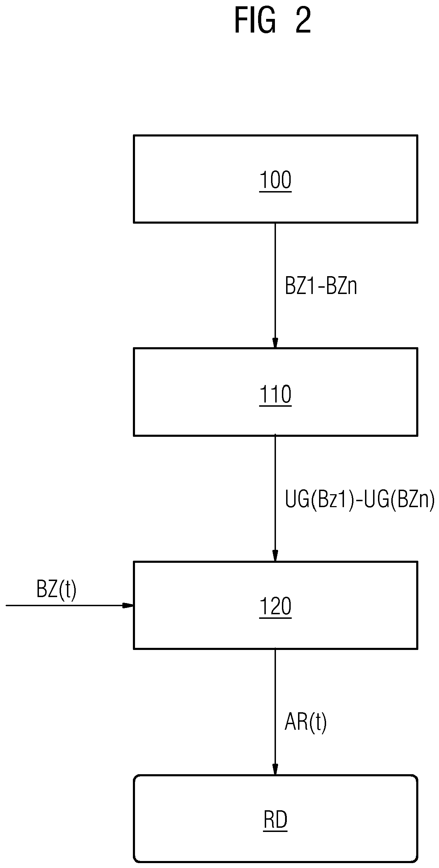

In der Figur 2 ist ein schematisches Flussdiagramm dargestellt, das beispielhaft die Bildung von Messwertuntergruppen und die Bildung von Auswahlrichtlinien darstellt:
In einem Voranalyseschritt 100 wird zunächst der in der Figur 1 gezeigte Netzabschnitt 10 des elektrischen Netzes dahingehend analysiert, welche Betriebszustände in dem Netzabschnitt zu erwarten sind bzw. mit hoher Wahrscheinlichkeit auftreten werden.

Die entsprechenden Betriebszustände BZ1 bis BZn werden nachfolgend in einem Simulationsschritt 110 jeweils näher analysiert. Für jeden Betriebszustand wird dabei jeweils ermittelt, welche der Sensoren S1 bis S16 für den jeweiligen Betriebszustand besonders relevante Messwerte liefern und welche Sensoren weniger relevant oder irrelevant sind. Wird im Simulationsschritt 110 beispielsweise festgestellt, dass bei dem Betriebszustand BZ1 die beiden Leitungen L6 und L11, die mit den Sensoren S6 und S11 bestückt sind, nur schwach belastet sind und relativ wenig Strom führen und auch im Falle von Netzstörungen oder im Falle eines Ausfalls von Komponenten nur wenig betroffen wären, so können für diesen Betriebszustand BZ1 die Messwerte der Sensoren S6 und S11 als irrelevant qualifiziert und bei der Festlegung der Messwertuntergruppe UG(BZ1) für diesen Betriebszustand BZ1 weggelassen werden. Andere Sensoren, die bei dem Betriebszustand BZ1 besonders hohe Ströme messen werden oder im Falle einer Netzstörung, beispielsweise im Falle eines Ausfalls einer Komponente des Netzabschnitts 10, besonders betroffen wären, werden hingegen in die Messwertuntergruppe UG(BZ1) aufgenommen.

In entsprechender Weise werden Messwertuntergruppen UG(BZ1) bis UG(BZn) für jeden der Betriebszustände BZ1 bis BZn des Voranalyseschritts 100 durch Simulation des Netzabschnitts 10 gebildet. Bei der Ermittlung der Messwertuntergruppen wird vorzugsweise nicht nur der jeweilige Sollbetriebszustand berücksichtigt, sondern darüber hinaus auch Abweichungen von diesem Sollbetriebszustand sowie auftretende dynamische Vorgänge, die im Falle eines Ausfalls von Komponenten und/oder einer signifikanten Änderung des jeweiligen Betriebszustands auftreten können.

In einem nachfolgenden Richtlinienerstellschritt 120 werden die im Rahmen des Simulationsschritts 110 gebildeten Messwertuntergruppen UG(BZ1) bis UG(BZn) unter Berücksichtigung eingangsseitig anliegender und von der Zeit t abhängiger Betriebsprognosedaten BZ(t) in einer zeitabhängigen Auswahlrichtlinie AR(t) zusammengefasst, die in einem Auswahlrichtliniendatensatz RD abgespeichert wird. Die Betriebsprognosedaten BZ(t) beschreiben den zu erwartenden Betrieb des elektrischen Netzes und des Netzabschnitts 10, also beispielsweise die Lastflüsse, die im zeitlichen Verlauf für einen zukünftigen Zeitabschnitt zu erwarten sind; die zeitabhängige Auswahlrichtlinie AR(t) berücksichtigt somit die zu erwartenden Betriebszustände und hält für diese jeweils eine geeignete Messwertuntergruppe vor.

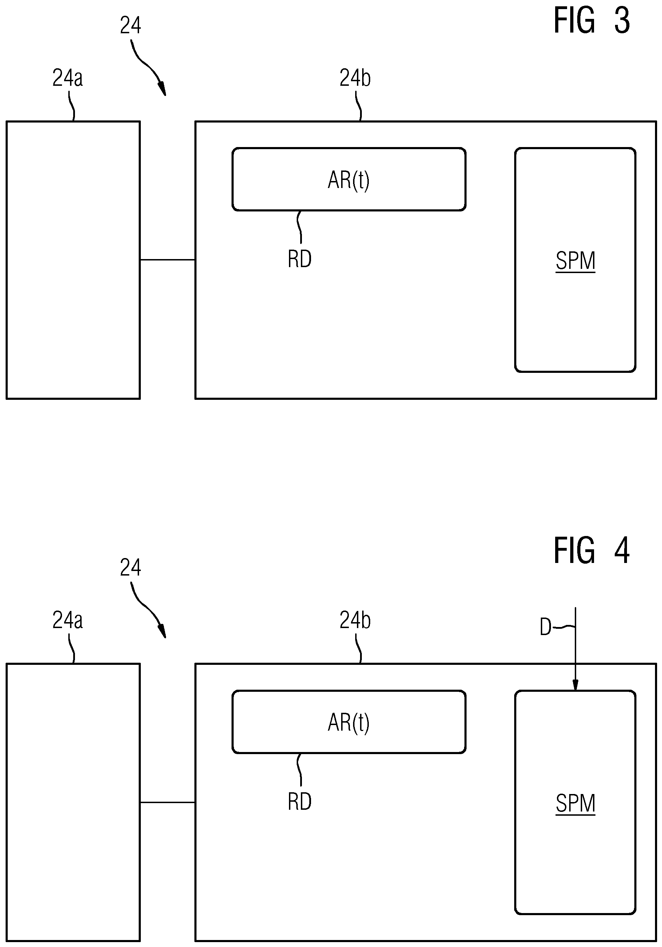

Die Figur 3 zeigt ein Ausführungsbeispiel für eine Steuereinrichtung 24, die bei der umrichterbasierten Netzeinheit 20 gemäß Figur 1 eingesetzt werden kann. Die Steuereinrichtung 24 gemäß Figur 3 weist eine Recheneinheit 24a und einen Speicher 24b auf. In dem Speicher 24b sind der Richtliniendatensatz RD mit der zeitabhängigen Auswahlrichtlinie AR(t) abgespeichert, wie sie beispielsweise gemäß dem Verfahren gemäß Figur 2 erstellt worden sind.

In dem Speicher 24b ist darüber hinaus ein Steuerprogrammmodul SPM abgespeichert, das in Abhängigkeit von den Messwerten der Sensoren S1 bis S16 die Umrichter 21 und 22 ansteuert. Das Steuerprogrammmodul SPM wird dabei zu jedem Zeitpunkt nicht immer alle Messwerte M berücksichtigen, sondern nur diejenigen Messwerte, die gemäß dem Auswahlrichtliniendatensatz RD bzw. der darin abgespeicherten zeitabhängigen Auswahlrichtlinie AR(t) für jeden Zeitpunkt zu berücksichtigen sind, da nur diese für den jeweiligen Betriebszustand des Netzabschnitts besonders relevant sind.

Die Figur 4 zeigt ein weiteres Ausführungsbeispiel für eine Steuereinrichtung 24, die zur Ansteuerung der beiden Umrichter 21 und 22 der umrichterbasierten Netzeinheit 20 gemäß Figur 1 eingesetzt werden kann. Bei dem Ausführungsbeispiel gemäß Figur 4 ist das Steuerprogrammmodul SPM zusätzlich dazu ausgebildet, auch externe Daten D zu berücksichtigen, um die Auswahl der zu berücksichtigenden Messwerte weiter zu verfeinern. Beispielsweise kann das Steuerprogrammmodul SPM in Abhängigkeit von den externen Daten D Messwerte der gemäß Auswahlrichtlinie AR(t) zu berücksichtigenden Messwerte verwerfen oder andere Messwerte zusätzlich berücksichtigen, wenn die externen Daten D eine solche Vorgehensweise sinnvoll erscheinen lassen.

Als externe Daten D können Messwerte externer Sensoren (Temperaturwerte, Windgeschwindigkeitswerte, Sonneneinstrahlungswerte, Eisbildungswerte) oder andere Arten von Daten wie beispielsweise der Strompreis berücksichtigt werden. Fällt der Strompreis beispielsweise signifikant, so ist mit einer höheren Stromentnahme und einer höheren Belastung des elektrischen Netzes zu rechnen, sodass je nach dem aktuellen Betriebszustand unter Umständen weitere oder andere Sensoren als die in der jeweils vorbereiteten Messwertuntergruppe bereits berücksichtigten Sensoren bzw. andere oder weitere Messwerte berücksichtigt werden sollten.

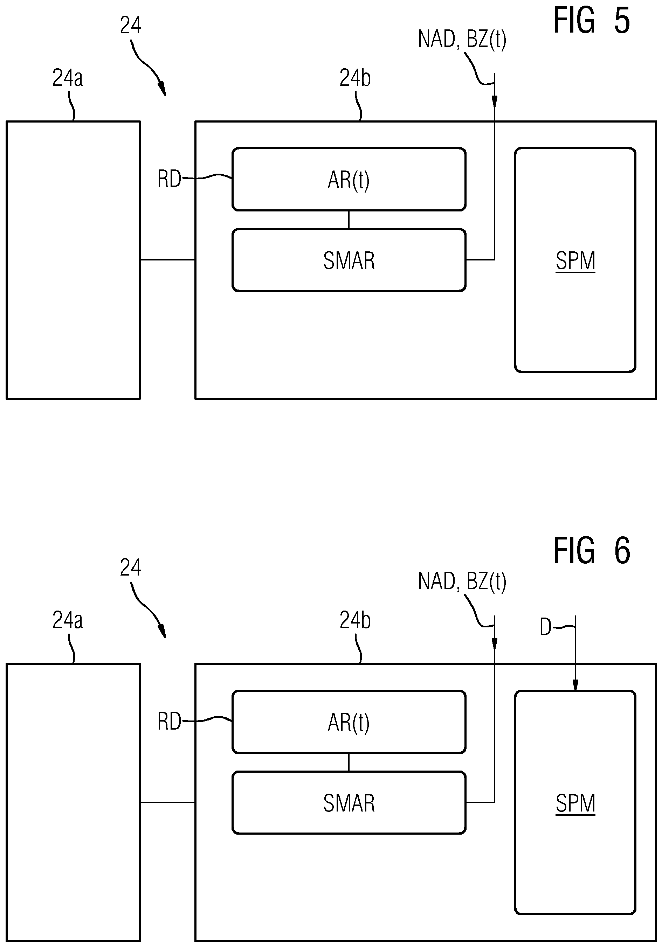

Die Figur 5 zeigt ein weiteres Ausführungsbeispiel für eine Steuereinrichtung 24, die zur Ansteuerung der beiden Umrichter 21 und 22 gemäß Figur 1 dienen kann. Die Steuereinrichtung 24 gemäß Figur 5 weist zusätzlich ein Simulationsmodul SMAR auf, mit dem die Steuereinrichtung 24 den Auswahlrichtliniendatensatz RD bzw. die zeitabhängige Auswahlrichtlinie AR(t) selbst ermitteln kann. Das Simulationsmodul SMAR kann beispielsweise so arbeiten, wie dies im Zusammenhang mit der Figur 2 erläutert worden ist. Die Simulation erfolgt vorzugsweise anhand von den Betriebsprognosedaten BZ(t) sowie anhand von Netzabschnittsdaten NAD, die die Topologie des Netzabschnitts 10 beschreiben und extern in die Steuereinrichtung 24 eingespeist und dem Simulationsmodul SMAR zur Verfügung gestellt werden.

Die Figur 6 zeigt ein weiteres Ausführungsbeispiel für eine Steuereinrichtung 24, die zur Ansteuerung der beiden Umrichter 21 und 22 gemäß Figur 1 herangezogen werden kann. Die Ausführungsvariante gemäß Figur 6 weist ein Simulationsmodul SMAR auf, wie es im Zusammenhang mit der Figur 5 erläutert worden ist, und ist darüber hinaus dazu ausgestaltet, externe Daten D zu berücksichtigen, wie dies im Zusammenhang mit der Figur 4 erläutert worden ist. Die Ausführungsvariante gemäß Figur 6 stellt somit eine Kombination der Ausführungsvarianten gemäß den Figuren 4 und 5 dar, sodass die obigen Erläuterungen im Zusammenhang mit diesen Figuren für die Variante gemäß Figur 6 entsprechend gelten.

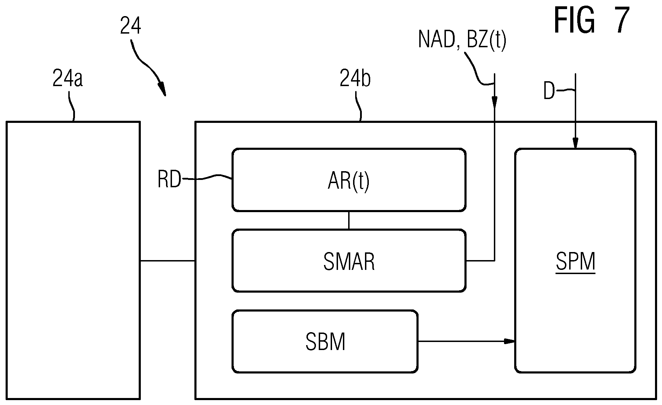

Die Figur 7 zeigt ein Ausführungsbeispiel für eine Steuereinrichtung 24 zur Ansteuerung der beiden Umrichter 21 und 22 gemäß Figur 1, bei der ein Speicher 24b zusätzlich ein Sonderbetriebsmodul SBM abgespeichert ist. Das Sonderbetriebsmodul SBM dient dazu, im Falle eines Sonderbetriebszustands, der sich von den in der Auswahlrichtlinie AR(t) berücksichtigten Betriebszuständen des Netzabschnitts 10 über ein vorgegebenes Maß hinaus unterscheidet, eine Sonderauswahlrichtlinie SAR zu erzeugen. Die Sonderauswahlrichtlinie SAR wird vorzugsweise durch Simulation der umrichterbasierten Netzeinheit 20 und des Wechselspannungsabschnitts 11 unter Berücksichtigung aller der Steuereinrichtung 24 zur Verfügung stehender aktueller Messwerte, also aller Messwerte aller Sensoren S1 bis S16, berechnet.

Das Steuerprogrammmodul SPM wird - während des Vorliegens des Sonderbetriebszustands - vorzugsweise die erstellte Sonderauswahlrichtlinie anstelle der in dem Richtliniendatensatz RD abgespeicherten Auswahlrichtlinie AR(t) berücksichtigen bzw. heranziehen.

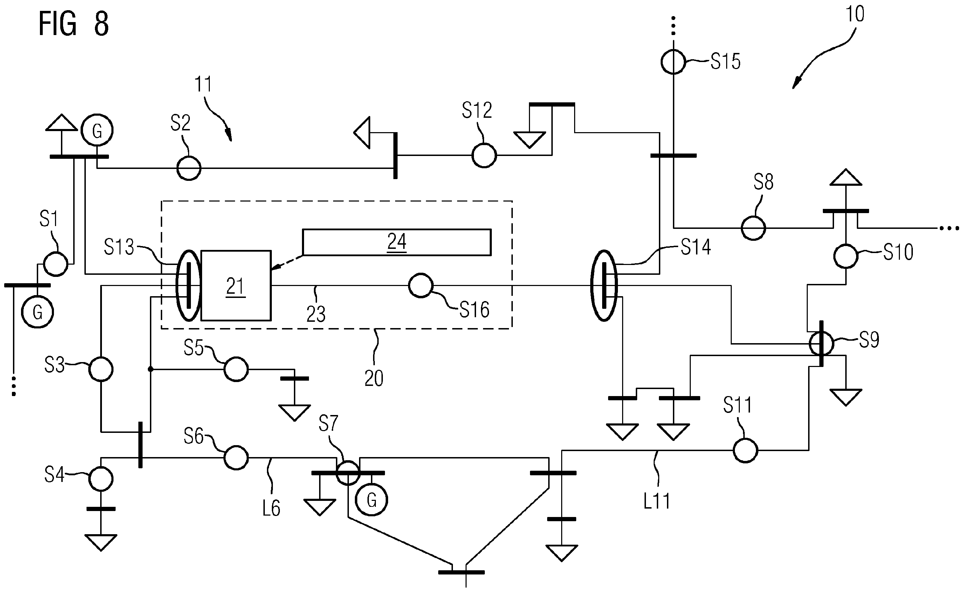

Die Figur 8 zeigt ein weiteres Ausführungsbeispiel für einen Netzabschnitt eines elektrischen Netzes 10. Im Unterschied zu dem Ausführungsbeispiel gemäß Figur 1 besteht die umrichterbasierte Netzeinheit 20 nicht aus zwei oder mehr Umrichtern, sondern lediglich aus einem einzigen Umrichter 21, der von der Steuereinrichtung 24 angesteuert wird. Bezüglich der Auswahl von Messwertem und der Bildung von Messwertuntergruppen gelten die obigen Erläuterungen im Zusammenhang mit den Figuren 1 bis 7 entsprechend. Die Steuereinrichtung 24 wird den Umrichter 21 vorzugsweise derart ansteuern, dass dieser Blindleistung in den Wechselspannungsabschnitt 11 einspeist oder Blindleistung aus dem Wechselspannungsabschnitt 11 entnimmt.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 10: Netzabschnitt
- 11: Wechselspannungsabschnitt
- 20: umrichterbasierte Netzeinheit
- 21: Umrichter
- 22: Umrichter
- 23: Hochspannungsgleichstromleitung
- 24: Steuereinrichtung
- 24a: Recheneinheit
- 24b: Speicher
- 100: Voranalyseschritt
- 110: Simulationsschritt
- 120: Richtlinienerstellschritt

- AR(t): zeitabhängige Auswahlrichtlinie
- BZ: Betriebsprognosedaten
- BZ1-BZn: Betriebszustände
- D: externe Daten
- G: Generator
- L6: Leitung
- L11: Leitung
- M: Messwert
- NAD: Netzabschnittsdaten
- RD: Auswahlrichtliniendatensatz
- S1-S14: Sensoren
- SAR: Sonderauswahlrichtlinie
- SBM: Sonderbetriebsmodul
- SMAR: Simulationsmodul
- SPM: Steuerprogrammmodul
- t: Zeit
- UG: Messwert(unter)gruppe

## Patentansprüche

1. Verfahren zum Betreiben einer umrichterbasierten Netzeinheit (20), die elektrisch innerhalb eines Wechselspannungsabschnitts (11) oder angrenzend an einen Wechselspannungsabschnitt (11) eines elektrischen Netzes angeordnet und an diesen elektrisch angeschlossen ist, wobei bei dem Verfahren eine Steuereinrichtung (24) durch Ansteuerung zumindest eines Umrichters (21, 22) der umrichterbasierten Netzeinheit (20) die Einspeisung und Entnahme von Wirk- und/oder Blindleistung in den bzw. aus dem Wechselspannungsabschnitt (11) einstellt, wobei
- zu der Steuereinrichtung (24) eine Vielzahl an Messwerten übermittelt wird, die sich zumindest auch auf unterschiedliche Messgrößen und/oder unterschiedliche Messorte innerhalb des Wechselspannungsabschnitts (11) oder der umrichterbasierten Netzeinheit (20) beziehen, und
- die Steuereinrichtung (24) aus der Vielzahl an vorliegenden Messwerten durch Auswahl gemäß einer vorgegebenen Auswahlrichtlinie (AR) jeweils eine Messwertgruppe (UG) auswählt und die Ansteuerung des zumindest einen Umrichters (21, 22) auf der Basis der Messwerte der jeweils ausgewählten Messwertgruppe (UG) durchführt,
**dadurch gekennzeichnet, dass**
- die Auswahlrichtlinie (AR) durch Simulation der umrichterbasierten Netzeinheit (20) und des Wechselspannungsabschnitts (11) oder zumindest eines von der umrichterbasierten Netzeinheit (20) beeinflussten Teilabschnitts des Wechselspannungsabschnitts (11) für unterschiedliche prognostizierte Betriebszustände des Wechselspannungsabschnitts (11) ermittelt wird und in Form eines Auswahlrichtliniendatensatzes (RD) in einem Speicher der Steuereinrichtung (24) abgespeichert ist.

2. Verfahren nach Anspruch 1,
**dadurch gekennzeichnet, dass**
- der Betrieb des Wechselspannungsabschnitts (11) zeitabhängig ist und über der Zeit zumindest hinsichtlich des Lastflusses veränderlich ist und
- die Auswahlrichtlinie (AR) zeitabhängig ist und die ausgewählten Messwertgruppen (UG) den jeweils aktuellen oder prognostizierten Lastfluss berücksichtigen.

3. Verfahren nach einem der voranstehenden Ansprüche,
**dadurch gekennzeichnet, dass**
- die Auswahlrichtlinie (AR) auf der Basis von prognostizierten zukünftigen Betriebszuständen des Wechselspannungsabschnitts (11) erstellt worden ist und/oder
- die Auswahlrichtlinie (AR) auf der Basis von prognostizierten zukünftigen Betriebszuständen des Wechselspannungsabschnitts (11) erstellt worden ist und in Abhängigkeit von externen Daten (D) modifiziert wird, wobei die externen Daten (D) andere Daten sind als die oben genannten Messwerte, von denen die Steuereinrichtung (24) jeweils eine Messwertgruppe (UG) auswählt und zur Ansteuerung des Umrichters (21, 22) heranzieht.

4. Verfahren nach Anspruch 3,
**dadurch gekennzeichnet, dass**
die Auswahlrichtlinie (AR) für jeden Zeitpunkt jeweils den prognostizierten Betriebszustand des Wechselspannungsabschnitts (11) sowie außerdem mindestens eine mögliche Abweichung von dem prognostizierten Betriebszustand berücksichtigt.

5. Verfahren nach Anspruch 4,
**dadurch gekennzeichnet, dass**
- die mindestens eine Abweichung oder eine der Abweichungen einen Ausfall oder eine Fehlfunktion einer oder mehrerer Komponenten des Wechselspannungsabschnitts (11), eine Wartung oder Abschaltung einer Leitung oder eines Netzabschnitts oder eine geplante Wartung oder geplante Abschaltung einer Leitung oder eines Netzabschnitts betrifft.

6. Verfahren nach Anspruch 4,
**dadurch gekennzeichnet, dass**
- die mindestens eine Abweichung oder eine der Abweichungen eine Lastschwankung im Wechselspannungsabschnitt (11) betrifft.

7. Verfahren nach Anspruch 4,
**dadurch gekennzeichnet, dass**
- die mindestens eine Abweichung oder eine der Abweichungen eine Abweichung des Strompreises von einem erwarteten Strompreis oder das Verlassen eines erwarteten Strompreisfensters betrifft.

8. Verfahren nach einem der voranstehenden Ansprüche,
**dadurch gekennzeichnet, dass**
- die Auswahlrichtlinie (AR) in Abhängigkeit von externen Daten (D) erstellt wird, wobei die externen Daten (D) andere Daten sind als die oben genannten Messwerte, von denen die Steuereinrichtung (24) jeweils eine Messwertgruppe (UG) auswählt und zur Ansteuerung des Umrichters (21, 22) heranzieht.

9. Verfahren nach einem der voranstehenden Ansprüche,
**dadurch gekennzeichnet, dass** die Auswahlrichtlinie (AR) dynamische Vorgänge im Falle eines Fehlers oder einer Lastschwankung im Wechselspannungsabschnitt (11) berücksichtigt.

10. Verfahren nach einem der voranstehenden Ansprüche,
**dadurch gekennzeichnet, dass**
- die Steuereinrichtung (24) eine Priorisierung der Messwerte innerhalb der jeweils ausgewählten Messwertgruppe (UG) vornimmt und diese Priorisierung bei der Ansteuerung des zumindest einen Umrichters (21, 22) berücksichtigt,
- wobei die Priorisierung zumindest auch einschließt, dass die Ansteuerung des zumindest einen Umrichters (21, 22) dazu führt, dass eine relative Abweichung eines Messwerts der ausgewählten Messwertgruppe (UG) von einem für diesen Messwert vorgegebenen Sollmesswert kleiner wird als die relative Abweichung eines anderen, weniger priorisierten Messwerts der ausgewählten Messwertgruppe (UG) von einem für diesen anderen Messwert vorgegebenen anderen Sollmesswert.

11. Verfahren nach einem der Ansprüche 4 bis 7,
**dadurch gekennzeichnet, dass**
die Auswahlrichtlinie (AR) unter der Maßgabe erstellt worden ist, dass die Messwertgruppen (UG) jeweils eine minimale Anzahl an Messwerten aufweisen, mit denen eine Ansteuerung des Umrichters (21, 22) für die prognostizierten Betriebszustände und deren Abweichungen unter Einbezug dynamischer Vorgänge im Falle von Abweichungen unter Berücksichtigung der Einhaltung für das elektrische Netz vorgegebener Zielparameter noch möglich ist.

12. Verfahren nach einem der voranstehenden Ansprüche,
**dadurch gekennzeichnet, dass**
- die Auswahlrichtlinie (AR) derart ausgestaltet ist, dass die ausgewählte Messwertgruppe (UG) zu zumindest einem Zeitpunkt, vorzugsweise zu jedem Zeitpunkt, jeweils zumindest zwei den Wechselspannungsabschnitt (11) betreffende Messwerte umfasst und/oder
- die Auswahlrichtlinie (AR) derart ausgestaltet ist, dass die Messwertgruppen (UG) zu zumindest einem Zeitpunkt, vorzugsweise zu jedem Zeitpunkt, mehr den Wechselspannungsabschnitt (11) betreffende Messwerte als den Umrichter (21, 22) betreffende Messwerte umfasst.

13. Verfahren nach einem der voranstehenden Ansprüche,
**dadurch gekennzeichnet, dass**
- im Falle eines Sonderbetriebszustands, der sich von in der Auswahlrichtlinie (AR) berücksichtigten Betriebszuständen des Wechselspannungsabschnitts (11) über ein vorgegebenes Maß hinaus unterscheidet, eine Sonderauswahlrichtlinie (SAR) durch Simulation der umrichterbasierten Netzeinheit (20) und des Wechselspannungsabschnitts (11) oder zumindest eines von der umrichterbasierten Netzeinheit (20) beeinflussten Teilabschnitts des Wechselspannungsabschnitts (11) unter Berücksichtigung aller der Steuereinrichtung (24) zur Verfügung stehender, aktueller Messwerte berechnet wird und
- die Sonderauswahlrichtlinie (SAR) anstelle der Auswahlrichtlinie (AR) bei der Ansteuerung des zumindest einen Umrichters (21, 22) berücksichtigt wird.

14. Verfahren nach einem der voranstehenden Ansprüche,
**dadurch gekennzeichnet, dass**
- die umrichterbasierte Netzeinheit (20) zwei Umrichter (21, 22) und eine Gleichstromleitung (23) umfasst, die die zwei Umrichter (21, 22) verbindet, wobei die zwei Umrichter (21, 22) an unterschiedlichen Anschlussstellen des Wechselspannungsabschnitts (11) angeschlossen sind oder
- die umrichterbasierte Netzeinheit (20) durch einen einzigen Umrichter (21) gebildet ist, der an den Wechselspannungsabschnitt (11) angeschlossen ist.

15. Steuereinrichtung (24) zum Betreiben einer umrichterbasierten Netzeinheit (20), die innerhalb eines Wechselspannungsabschnitts (11) oder angrenzend an einen Wechselspannungsabschnitt (11) eines elektrischen Netzes angeordnet ist, wobei die Steuereinrichtung (24) dazu ausgebildet ist, durch Ansteuerung zumindest eines Umrichters (21, 22) der umrichterbasierten Netzeinheit (20) die Einspeisung und Entnahme von Wirk- und/oder Blindleistung in den bzw. aus dem Wechselspannungsabschnitt (11) einzustellen, wobei
- die Steuereinrichtung (24) dazu ausgestaltet ist, eine Vielzahl an Messwerten zu empfangen, die sich zumindest auch auf unterschiedliche Messgrößen und/oder unterschiedliche Messorte innerhalb des Wechselspannungsabschnitts (11) oder der umrichterbasierten Netzeinheit (20) beziehen, und
- die Steuereinrichtung (24) dazu ausgestaltet ist, aus der Vielzahl an vorliegenden Messwerten durch Auswahl gemäß einer vorgegebenen Auswahlrichtlinie (AR) jeweils eine Messwertgruppe (UG) auszuwählen und die Ansteuerung des zumindest einen Umrichters (21, 22) auf der Basis der Messwerte der jeweils ausgewählten Messwertgruppe (UG) durchzuführen,
**dadurch gekennzeichnet, dass**
- die Auswahlrichtlinie (AR) durch Simulation der umrichterbasierten Netzeinheit (20) und des Wechselspannungsabschnitts (11) oder zumindest eines von der umrichterbasierten Netzeinheit (20) beeinflussten Teilabschnitts des Wechselspannungsabschnitts (11) für unterschiedliche prognostizierte Betriebszustände des Wechselspannungsabschnitts (11) ermittelt ist und in Form eines Auswahlrichtliniendatensatzes (RD) in einem Speicher der Steuereinrichtung (24) abgespeichert ist.

## Claims

1. Method for operating a converter-based grid unit (20), which is arranged electrically within an AC voltage section (11) or adjacent to an AC voltage section (11) of an electrical grid and is electrically connected to said AC voltage section, wherein, in the method, a control device (24) adjusts the infeed and drawing of active power and/or reactive power into and from the AC voltage section (11) through actuation of at least one converter (21, 22) of the converter-based grid unit (20),
wherein
- a plurality of measurement values is transmitted to the control device (24), which measurement values at least also relate to different measurement variables and/or different measurement locations within the AC voltage section (11) or the converter-based grid unit (20), and
- the control device (24) selects a respective measurement value group (UG) from the plurality of available measurement values by selecting in accordance with a predefined selection guideline (AR), and actuates the at least one converter (21, 22) on the basis of the measurement values of the respectively selected measurement value group (UG),
**characterized in that**
- the selection guideline (AR) is determined for different forecast operating states of the AC voltage section (11) through simulation of the converter-based grid unit (20) and the AC voltage section (11) or at least one subsection of the AC voltage section (11) influenced by the converter-based grid unit (20) and is stored in a memory of the control device (24) in the form of a selection guideline dataset (RD).

2. Method according to Claim 1,
**characterized in that**
- the operation of the AC voltage section (11) is dependent on time and is variable over time at least with respect to the load flow and
- the selection guideline (AR) is dependent on time and the selected measurement value groups (UG) take the respective current or forecast load flow into consideration.

3. Method according to one of the preceding claims, **characterized in that**
- the selection guideline (AR) has been created on the basis of forecast future operating states of the AC voltage section (11) and/or
- the selection guideline (AR) has been created on the basis of forecast future operating states of the AC voltage section (11) and is modified depending on external data (D), wherein the external data (D) are data other than the aforementioned measurement values from which the control device (24) selects a respective measurement value group (UG) and uses same to actuate the converter (21, 22).

4. Method according to Claim 3,
**characterized in that**
the selection guideline (AR) takes the respective forecast operating state of the AC voltage section (11) and furthermore at least one possible deviation from the forecast operating state into consideration for each time.

5. Method according to Claim 4,
**characterized in that**
- the at least one deviation or one of the deviations relates to a failure or a malfunction of one or more components of the AC voltage section (11), a maintenance or shutdown of a line or a grid section, or a planned maintenance or planned shutdown of a line or a grid section.

6. Method according to Claim 4,
**characterized in that**
- the at least one deviation or one of the deviations relates to a load fluctuation in the AC voltage section (11).

7. Method according to Claim 4,
**characterized in that**
- the at least one deviation or one of the deviations relates to a deviation of the electricity price from an expected electricity price or the departure from an expected electricity price window.

8. Method according to one of the preceding claims, **characterized in that**
- the selection guideline (AR) is created depending on external data (D), wherein the external data (D) are data other than the aforementioned measurement values from which the control device (24) selects a respective measurement value group (UG) and uses same to actuate the converter (21, 22).

9. Method according to one of the preceding claims,
**characterized in** thar
the selection guideline (AR) takes dynamic processes into consideration in the event of a fault or a load fluctuation in the AC voltage section (11).

10. Method according to one of the preceding claims,
**characterized in that**
- the control device (24) prioritizes the measurement values within the respective selected measurement value group (UG) and takes this prioritization into consideration in the actuation of the at least one converter (21, 22),
- wherein the prioritization at least also includes the fact that the actuation of the at least one converter (21, 22) leads to a relative deviation of a measurement value of the selected measurement value group (UG) from a setpoint measurement value predefined for said measurement value being smaller than the relative deviation of another, less prioritized measurement value of the selected measurement value group (UG) from another setpoint measurement value predefined for said other measurement value.

11. Method according to one of the Claims 4 to 7,
**characterized in that**
the selection guideline (AR) has been created with the proviso that the measurement value groups (UG) each have a minimum number of measurement values, using which it is still possible to actuate the converter (21, 22) for the forecast operating states and the deviations thereof including dynamic processes in the event of deviations taking into consideration the compliance with target parameters predefined for the electrical grid.

12. Method according to one of the preceding claims,
**characterized in that**
- the selection guideline (AR) is configured in such a way that the selected measurement value group (UG) comprises in each case at least two measurement values relating to the AC voltage section (11) at at least one time, preferably at each time, and/or
- the selection guideline (AR) is configured in such a way that the measurement value group (UG) comprises more measurement values relating to the AC voltage section (11) than measurement values relating to the converter (21, 22) at at least one time, preferably at each time.

13. Method according to one of the preceding claims,
**characterized in that**,
- in the case of a special operating state, which differs by more than a predefined extent from operating states of the AC voltage section (11) taken into consideration in the selection guideline (AR), a special selection guideline (SAR) is calculated through simulation of the converter-based grid unit (20) and the AC voltage section (11) or at least one subsection of the AC voltage section (11) influenced by the converter-based grid unit (20), taking into consideration all of the current measurement values available to the control device (24) and
- the special selection guideline (SAR) is taken into consideration in the actuation of the at least one converter (21, 22) instead of the selection guideline (AR).

14. Method according to one of the preceding claims,
**characterized in that**
- the converter-based grid unit (20) comprises two converters (21, 22) and a DC line (23) which connects the two converters (21, 22), wherein the two converters (21, 22) are connected to different connection points of the AC voltage section (11) or
- the converter-based grid unit (20) is formed by a single converter (21) which is connected to the AC voltage section (11) .

15. Control device (24) for operating a converter-based grid unit (20), which is arranged within an AC voltage section (11) or adjacent to an AC voltage section (11) of an electrical grid, wherein the control device (24) is designed to adjust the infeed and drawing of active power and/or reactive power into and from the AC voltage section (11) through actuation of at least one converter (21, 22) of the converter-based grid unit (20), wherein
- the control device (24) is configured to receive a plurality of measurement values, which at least also relate to different measurement variables and/or different measurement locations within the AC voltage section (11) or the converter-based grid unit (20), and
- the control device (24) is configured to select a respective measurement value group (UG) from the plurality of available measurement values by selecting in accordance with a predefined selection guideline (AR), and to actuate the at least one converter (21, 22) on the basis of the measurement values of the respectively selected measurement value group (UG),
**characterized in that**
- the selection guideline (AR) is determined for different forecast operating states of the AC voltage section (11) through simulation of the converter-based grid unit (20) and the AC voltage section (11) or at least one subsection of the AC voltage section (11) influenced by the converter-based grid unit (20) and is stored in a memory of the control device (24) in the form of a selection guideline dataset (RD).

## Revendications

1. Procédé pour faire fonctionner une unité (20) de réseau à base de convertisseurs, qui est montée électriquement dans un tronçon (11) en tension alternative ou au voisinage d'un tronçon (11) en tension alternative d'un réseau électrique et qui est raccordée électriquement à celui-ci, dans lequel, dans le procédé, un dispositif (24) de commande règle, en commandant au moins un convertisseur (21, 22) de l'unité (20) de réseau à base de convertisseurs, l'injection de puissance active et/ou réactive dans le tronçon (11) en tension alternative et le prélèvement de puissance active et/ou réactive de ce tronçon (11) en tension alternative, dans lequel
- on transmet au dispositif (24) de commande une pluralité de valeurs de mesure, qui se rapportent au moins également à des grandeurs de mesure différentes et/ou à des endroits de mesure différents dans le tronçon (11) en tension alternative ou dans l'unité (20) de réseau à base de convertisseurs, et
- le dispositif (24) de commande sélectionne, parmi la pluralité de valeurs de mesure présentes, par sélection suivant une directive (AR) de sélection donnée à l'avance, respectivement un groupe (UG) de valeurs de mesure et effectue la commande du au moins un convertisseur (21, 22) sur la base des valeurs de mesure du groupe (UG) de valeurs de mesure sélectionné respectivement,
**caractérisé en ce que**
- l'on détermine la directive (AR) de sélection par simulation de l'unité (20) de réseau à base de convertisseurs et du tronçon (11) en tension alternative ou d'au moins un tronçon partiel, influencé par l'unité (20) de réseau à base de convertisseurs, du tronçon (11) en tension alternative pour des états de fonctionnement pronostiqués différents du tronçon (11) en tension alternative et on la met sous la forme d'un ensemble (RD) de données de directives de sélection dans une mémoire du dispositif (24) de commande.

2. Procédé suivant la revendication 1,
**caractérisé en ce que**
- le fonctionnement du tronçon (11) en tension alternative dépend du temps et varie en fonction du temps au moins en ce qui concerne le flux de charge, et
- la directive (AR) de sélection dépend du temps et les groupes (UG) de valeurs de mesure sélectionnés prennent en compte le flux de charge en cours ou pronostiqué respectivement.

3. Procédé suivant l'une des revendications précédentes, **caractérisé en ce que**
- l'on a établi la directive (AR) de sélection sur la base d'états de fonctionnement à venir pronostiqués du tronçon (11) en tension alternative, et/ou
- l'on a établi la directive (AR) de sélection sur la base d'états de fonctionnement à venir pronostiqués du tronçon (11) en tension alternative et on la modifie en fonction de données (D) extérieures, dans lequel les données (D) extérieures sont des données autres que les valeurs de mesure mentionnées ci-dessus, parmi lesquelles le dispositif (24) de commande sélectionne respectivement un groupe (UG) de valeurs de mesure et en tire parti pour la commande du convertisseur (21, 22).

4. Procédé suivant la revendication 3,
**caractérisé en ce que**
la directive (AR) de sélection prend en compte à chaque instant respectivement l'état de fonctionnement pronostiqué du tronçon (11) en tension alternative, ainsi qu'en outre au moins un écart possible à l'état de fonctionnement pronostiqué.

5. Procédé suivant la revendication 4,
**caractérisé en ce que**
- le au moins un écart ou l'un des écarts concerne une défaillance ou un fonctionnement défectueux d'un ou plusieurs composants du tronçon (11) en tension alternative, un entretien ou un arrêt d'une ligne ou d'un tronçon du réseau ou un entretien planifié ou un arrêt planifié d'une ligne ou d'un tronçon du réseau.

6. Procédé suivant la revendication 4,
**caractérisé en ce que**
- le au moins un écart ou l'un des écarts concerne une fluctuation de charge dans le tronçon (11) en tension alternative.

7. Procédé suivant la revendication 4
**caractérisé en ce que**
- au moins un écart ou l'un des écarts concerne un écart du prix du courant à un prix du courant escompté ou l'abandon d'une fenêtre de prix de courant escomptée.

8. Procédé suivant l'une des revendications précédentes, **caractérisé en ce que**
- l'on établit la directive (AR) de sélection en fonction de données (D) extérieures, dans lequel les données (D) extérieures sont des données autres que les valeurs de mesure mentionnées ci-dessus, parmi lesquelles le dispositif (24) de commande sélectionne respectivement un groupe (UG) de valeurs de mesure et en tire parti pour la commande du convertisseur (21, 22).

9. Procédé suivant l'une des revendications précédentes, **caractérisé en ce que**
la directive (AR) de sélection tient compte de processus dynamiques dans le cas d'une défaillance ou d'un fluctuation de charge dans le tronçon (11) en tension alternative.

10. Procédé suivant l'une des revendications précédentes, **caractérisé en ce que**
- le dispositif (24) de commande effectue une mise en priorité des valeurs de mesure dans le groupe (UG) de valeurs de mesure respectives sélectionné et tient compte de cette mise en priorité lors de la commande du au moins un convertisseur (21, 22),
- dans lequel la mise en priorité inclut au moins également que la commande du au moins un convertisseur (21, 22) fait qu'un écart relatif d'une valeur de mesure du groupe (UG) de valeurs de mesure sélectionné à une valeur de mesure de consigne donnée à l'avance pour cette valeur de mesure est plus petit que l'écart relatif d'une autre valeur de mesure moins mise en priorité du groupe (UG) de valeur de mesure sélectionné à une autre valeur de mesure de consigne donnée à l'avance pour cette autre valeur de consigne.

11. Procédé suivant l'une des revendications 4 à 7,
**caractérisé en ce que**
l'on a établi la directive (AR) de sélection à la condition que les groupes (UG) de valeurs de mesure aient respectivement un nombre minimum de valeurs de mesure, par lesquelles une commande du convertisseur (21, 22) est encore possible pour les états de fonctionnement pronostiqués et leurs écarts, y compris des processus dynamiques dans le cas d'écarts, en tenant compte du respect du paramètre cible donné à l'avance pour le réseau électrique.

12. Procédé suivant l'une des revendications précédentes, **caractérisé en ce que**
- la directive (AR) de sélection est conformée de manière à ce que le groupe (UG) de valeurs de mesure sélectionné comprenne au moins à un instant, de préférence à chaque instant, respectivement au moins deux valeurs de mesure concernant le tronçon (11) en tension alternative, et/ou
- la directive (AR) de sélection est conformée de manière à ce que le groupe (UG) de valeurs de mesure comprenne au moins un instant, de préférence à chaque instant, plus de valeurs de mesure concernant le tronçon (11) en tension alternative que de valeurs de mesure concernant le convertisseur (21, 22).

13. Procédé suivant l'une des revendications précédentes, **caractérisé en ce que**
- dans le cas d'un état de fonctionnement particulier, qui se distingue d'états de fonctionnement, pris en compte dans la directive (AR) de sélection, du tronçon (11) en tension alternative, au-delà d'une mesure données à l'avance, on calcule un directive (SAR) de sélection particulière par simulation de l'unité (20) de réseau à base de convertisseurs et du tronçon (11) en tension alternative ou d'au moins un tronçon partiel, influencé par l'unité (20) de réseau à base de convertisseurs, du tronçon (11) en tension alternative, en tenant compte de toutes les valeurs de mesure en cours à disposition du dispositif (24) de commande, et
- on prend en compte la directive (SAR) de sélection particulière au lieu de la directive (AR) de sélection, lors de la commande du au moins un convertisseur (21, 22).

14. Procédé suivant l'une des revendications précédentes, **caractérisé en ce que**
- l'unité (20) de réseau à base de convertisseurs comprend deux convertisseurs (21, 22) et une ligne (23) de courant continu, qui relie les deux convertisseurs (21, 22), dans lequel les deux convertisseurs (21, 22) sont raccordés en des points de raccordement différents du tronçon (11) en tension alternative ou
- l'unité (20) de réseau à base de convertisseurs est formée d'un convertisseur (21) unique, qui est raccordé au tronçon (11) en tension alternative.

15. Dispositif (24) de commande pour faire fonctionner une unité (20) de réseau à base de convertisseurs, qui est montée dans un tronçon (11) en tension alternative ou au voisinage d'un tronçon (11) en tension alternative d'un réseau électrique, dans lequel le dispositif (24) de commande est constitué pour régler, par commande d'au moins un convertisseur (21, 22) de l'unité (20) de réseau à base de convertisseurs, l'injection de puissance active et/ou réactive dans le tronçon (11) en tension alternative ou le prélèvement de puissance active et/ou réactive du tronçon (11) en tension alternative, dans lequel
- le dispositif (24) de commande est conformé pour recevoir une pluralité de valeurs de mesure, qui se rapportent au moins également à des grandeurs de mesure différentes et/ou à des endroits de mesure différents dans le tronçon (11) en tension alternative ou dans l'unité (20) de réseau à base de convertisseurs, et
- le dispositif (24) de commande est conformé pour sélectionner, dans la pluralité de valeurs de mesure présentes, par sélection suivant une directive (AR) de sélection donnée à l'avance, respectivement un groupe (UG) de valeurs de mesure et pour effectuer la commande du au moins un convertisseur (21, 22) sur la base des valeurs de mesure du groupe (UG) de valeurs de mesure sélectionné respectivement,
**caractérisé en ce que**
- la directive (AR) de sélection est déterminée par simulation de l'unité (20) de réseau à base de convertisseurs et du tronçon (11) en tension alternative ou d'au moins un tronçon partiel, influencé par l'unité (20) de réseau à base de convertisseurs, du tronçon (11) en tension alternative pour des états de fonctionnement pronostiqués différents du tronçon (11) en tension alternative et on la met sous la forme d'un ensemble (RD) de données de directives de sélection dans une mémoire du dispositif (24) de commande.
